# FASCICULE DE BREVET EUROPEEN

(11) **EP 2 269 929 B1**
(45) Date de publication et mention de la délivrance du brevet: **04.01.2012**
(21) Numéro de dépôt: 10166093.4
(22) Date de dépôt: 16.06.2010
(51) Int. Cl.: B65H 1/06, B65H 1/26, B65H 1/30, B65G 47/51

(54) **Dispositif de chargement automatique à forte capacité**
Vorrichtung zum automatischen Laden mit hoher Leistungskapazität
High-capacity automatic loading device

(30) Priorité: 03.07.2009 FR 0954580
(43) Date de publication de la demande: 05.01.2011
(73) Titulaire: Neopost Technologies, 92220 Bagneux (FR)
(72) Inventeur: Pillard, Romain, 77210, AVON (FR); Roudaut, Etienne, 75018, PARIS (FR)
(74) Mandataire: David, Alain

(56) Documents cités:
- US-A- 5 370 382
- US-A1- 2008 119 341
- US-A1- 2009 110 458

## Description

### Domaine de l'invention

La présente invention se rapporte au domaine du traitement de courrier et elle concerne plus particulièrement un dispositif de chargement d'enveloppes pour une machine de traitement de courrier permettant d'alimenter cette machine avec un grand nombre d'articles de courrier.

### Art antérieur

Les machines de traitement de courrier comportent classiquement trois principaux éléments : un alimenteur en articles de courrier, un poste d'affranchissement de ces articles de courrier disposé en sortie de l'alimenteur (incorporant ou non un dispositif de pesée) et, disposé en sortie du poste d'affranchissement, un dispositif de réception pour recevoir les articles de courrier affranchis au poste d'affranchissement.

Les machines actuelles peuvent affranchir des articles de courrier en vrac (mixed mail), c'est-à-dire de tout poids et de tout format, ces articles de courrier étant stockés à plat dans le magasin de l'alimenteur en une pile de faible capacité (environ 200 enveloppes d'épaisseur moyenne) pour être affranchis ensuite au fur et à mesure de leur extraction individuelle par les moyens de dépilage et de sélection de l'alimenteur. Cette faible capacité imposée par ces moyens de dépilage et de sélection limitent la productivité réelle de la machine car elle nécessite de fréquentes interventions de l'opérateur dues au chargement des articles de courrier dans l'alimenteur. A titre d'exemple, pour obtenir une cadence d'affranchissement de 15 000 enveloppes/heure, il est nécessaire de recharger 75 fois/heure le magasin de l'alimenteur, ce qui en pratique laisse peu de temps à cet opérateur pour effectuer les autres interventions (déchargement des enveloppes, rangement par format dans les caisses postales, etc.) également nécessaires au suivi de la machine de traitement de courrier.

Il pourrait être envisagé d'augmenter la hauteur de la pile pour augmenter la capacité de traitement. Malheureusement, le poids de la pile augmentant proportionnellement, pour éviter les passages multiples, la force de friction exercée par les rouleaux d'extraction et nécessaire à l'extraction d'une enveloppe au bas de cette pile devra obligatoirement être variable, tout d'abord élevée lorsque le pile est haute puis de plus en plus faible au fur et à mesure de sa diminution, ce qui nécessitera une motorisation plus puissante, une cinématique plus robuste et une électronique de commande plus complexe, l'ensemble étant donc extrêmement coûteux. US 2008/119341 A1 propose un dispositif de chargement d'articles plats de forte capacité comportant une pluralité de piles indépendantes superposés.

Aussi, il a été proposé avec la demande EP 1 923 340 de la demanderesse un dispositif de chargement d'enveloppes pouvant recevoir une grande pile d'articles de courrier dont l'éjection paquet après paquet au travers d'une paroi guillotine du dispositif est effectuée par des moyens de commande en fonction d'un capteur de présence courrier monté sur le dispositif de chargement lui-même et dont l'état dépend de la présence ou non d'articles de courrier dans l'alimenteur placé en aval de ce dispositif de chargement. Ce dispositif qui donne globalement satisfaction présente toutefois encore certains inconvénients liés d'une part à la paroi guillotine dont il est pourvu et qui en générant par moment des bourrages limite la cadence réelle d'affranchissement et d'autre part à l'augmentation de l'emprise au sol de la machine de traitement de courrier due à la présence supplémentaire de ce dispositif en amont de l'alimenteur. Il existe donc aujourd'hui encore un besoin non satisfait pour un dispositif de chargement perfectionné qui permette d'assurer réellement une cadence d'affranchissement de 15 000 et plus enveloppes par heure.

### Objet et définition de l'invention

La présente invention a pour objet un dispositif de chargement ayant une capacité d'alimentation bien supérieure à celle d'un magasin standard d'alimenteur et qui pallie les inconvénients précités.

Ces buts sont atteints par un dispositif de chargement d'articles plats comportant une colonne de rangement pour recevoir des articles plats, caractérisé en ce que lesdits articles plats sont séparés en une pluralité de piles indépendantes superposées les unes au dessus des autres et maintenues par une pluralité de moyens de support, des moyens de commande étant prévus pour libérer successivement par gravité chacune desdites piles indépendantes ainsi séparées, lesdits moyens de support comportant une palette disposée sur un des cotés de ladite pile d'articles plats, ladite palette pouvant se rétracter horizontalement d'une position de support à une position de retrait sous l'action de la rotation d'une roue dentée à laquelle ladite palette est reliée par un mécanisme de type bielle-manivelle, ladite position de retrait permettant ladite libération par gravité de ladite pile d'articles plats.

De préférence, lesdits articles plats sont des articles de courrier et le dispositif de chargement est disposé au dessus d'un plateau de réception d'un alimenteur de machine de traitement de courrier.

Ainsi, avec cette configuration, l'emprise au sol de la machine de traitement de courrier n'est pas modifiée et la libération successive des paquets d'articles de courrier dimensionné par rapport à la capacité de l'alimenteur permet d'alimenter automatiquement l'alimenteur sans risque de bourrage et donc sans aucune rupture dans la cadence d'affranchissement.

Selon le mode de réalisation envisagé lesdits moyens de support peuvent comporter une palette disposée sur un des cotés de ladite pile d'articles plats, ladite palette pouvant se rétracter horizontalement d'une position de support à une position de retrait, ladite position de retrait permettant la libération par gravité de ladite pile d'articles plats, ou bien au moins deux palettes (avantageusement quatre) de part et d'autre de ladite pile d'articles plats, lesdites palettes pouvant se rétracter horizontalement d'une position de support à une position de retrait, ladite position de retrait permettant la libération par gravité de ladite pile d'articles plats.

Avantageusement, ladite rotation de ladite roue dentée est réalisée par lesdits moyens de commande, via une courroie motorisée, en fonction de l'état d'un capteur de présence courrier sur un plateau de réception dudit alimenteur.

De préférence, ledit capteur est choisi parmi des détecteurs de type mécanique, magnétique ou optique.

Avantageusement, ladite pile d'articles de courrier libérée comporte une épaisseur définie par la capacité d'alimentation maximale dudit alimenteur.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en perspective extérieure d'un alimenteur pour machine de traitement de courrier associé à un dispositif de chargement d'enveloppes selon l'invention,
- les figures 2A et 2B illustrent deux modes de réalisation du dispositif de chargement d'enveloppes de la figure 1,
- la figure 2C est une variante de réalisation du dispositif de la figure 2B,
- les figures 3A à 3D illustrent différentes positions de fonctionnement du dispositif de chargement d'enveloppes selon le mode de réalisation non revendiqué de la figure 2A, et
- les figures 4A à 4D illustrent différentes positions de fonctionnement du dispositif de chargement d'enveloppes selon le mode de réalisation préférentiel de l'invention de la figure 2B.

### Description détaillée d'un mode de réalisation préférentiel

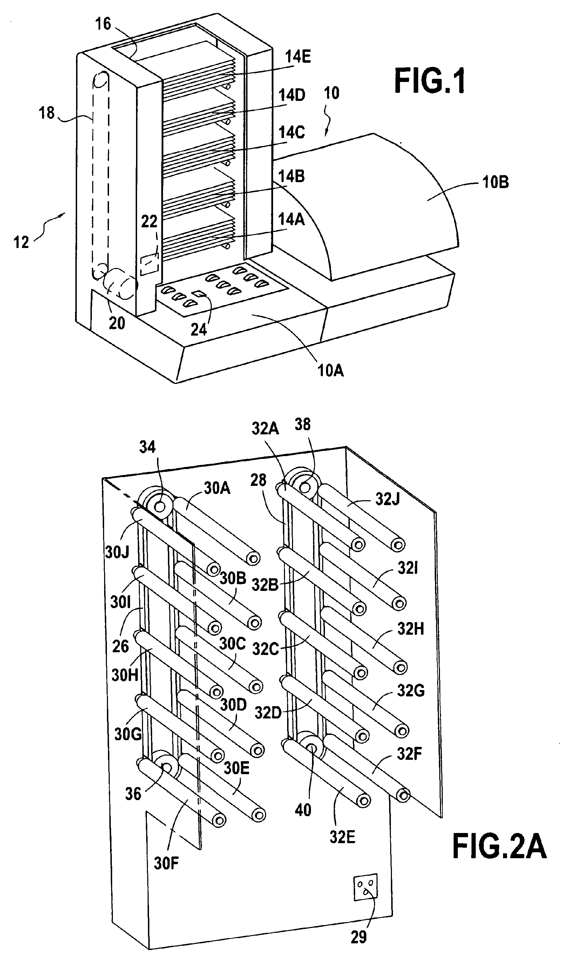

La figure 1 montre en perspective un dispositif de chargement d'articles de courrier à forte capacité selon l'invention destiné à coopérer avec un alimenteur de machine de traitement de courrier.

Cet alimenteur en articles de courrier 10 comporte classiquement un plateau 10A de réception des articles de courrier et des moyens 10B de dépilage et sélection pour sélectionner l'un après l'autre des articles de courrier empilés sur ce plateau. Pour permettre une gestion correcte de la pile d'articles de courrier disposée sur le plateau de réception, c'est-à-dire garantir un dépilage sans bourrage ou double sélection (voire sélection multiples) d'articles de courrier, typiquement la capacité de chargement d'un tel alimenteur est limitée à une hauteur de pile d'environ 200 mm, ce qui correspond en pratique à une capacité de chargement de l'ordre de 200 enveloppes de format européen standard remplies chacune d'une feuille au format A4.

Selon l'invention, cette capacité est notablement augmentée par l'adjonction au dessus du plateau de réception 10A de cet alimenteur d'un dispositif de chargement 12 ayant la forme d'une colonne de rangement 14 comportant une pluralité de compartiments individuels superposés 14A, 14B, 14C, 14D, 14E destinés chacun à recevoir et maintenir en position une pile d'articles de courrier dont la hauteur (et donc le nombre d'enveloppes qu'elle contient) correspond au plus et de préférence à la capacité maximale de chargement de l'alimenteur sur lequel il doit être monté. Chacune des piles est séparée de celles adjacentes de façon à permettre un dépôt pile par pile sur le plateau de réception de l'alimenteur et il est prévu une ouverture de chargement 16 qui peut être frontale ou supérieure comme illustrée. Le dispositif de chargement est solidarisé de l'alimenteur par des moyens de liaison mécanique (non représenté) et un connecteur électrique (voir la référence 29 de la figure 2A) est prévu pour le transfert des informations de contrôle/commande avec l'alimenteur. Il comporte en outre un système de transport et d'éjection 18, avantageusement de type à pignons et courroies dentés, motorisé par un moteur d'entraînement 20, pour libérer successivement de la colonne de rangement les piles d'articles de courrier qu'elle renferme. Le moteur d'entraînement est actionné par un module de traitement 22 selon l'état d'un capteur de présence courrier 24, de type mécanique, magnétique ou de préférence optique, disposés au niveau du plateau de réception 10A de l'alimenteur et dont l'état est communiqué au dispositif de chargement via le connecteur électrique.

La figure 2A illustre à titre informatif un mode de réalisation non revendiqué du dispositif de chargement selon l'invention dans lequel les différentes piles d'articles de courrier sont supportées par des barres de soutien montées sur deux chaines motorisées 26, 28 disposées de part et d'autre de cette pile. Plus précisément, dans l'exemple illustré, sur chaque chaine sont fixées en porte-à-faux dix barres de soutien 30A-30J ; 32A-32J reparties régulièrement sur cette chaine de telle sorte que cinq d'entres elles 30A-30E ; 32A-32E assurent chacune le support d'une pile d'articles de courrier pendant que les cinq autres 30F-30J ; 32F-32J sont dans une position de repos. Chaque chaine est maintenue tendue entre deux pignons 34, 36 ; 38, 40 dont l'un au moins assure directement l'entrainement de la chaine entre une position haute et une position basse. Préférentiellement, toutes les chaines sont entrainées simultanément à partir d'un seul pignon moteur 36. Ces cinq barres de soutien définissent cinq niveaux sur lesquels pourront reposer cinq piles d'articles de courrier, l'intervalle entre deux barres de soutien superposées définissant la hauteur maximale admissible pour une pile. Le chargement des différentes piles s'effectue alors frontalement en déposant simplement chaque pile sur ses deux barres de soutien correspondantes.

On notera que s'il a été fait référence essentiellement à l'utilisation d'une seule chaine d'entrainement 26 ou 28 par coté, le recours à deux chaines parallèles pour chaque coté de la pile d'articles de courrier et entre lesquelles les barres de soutien seraient maintenue ou bien à tout autre dispositif analogue permettant le transport puis la libération par gravité pile après pile est bien entendu aussi possible. Toutefois, lorsque les barres de soutien sont maintenues entre deux chaines parallèles, du fait de la présence de la seconde chaine, le chargement ne peut plus être effectué frontalement et il doit donc être effectué par le haut. Dès lors, une fois la première pile mise en place sur les deux barres de soutien opposées 30A, 32J, le moteur doit être actionné pour entrainer une rotation des chaines de façon à descendre d'un niveau afin de placer le seconde pile dans la colonne de rangement et ainsi de suite jusqu'à la cinquième. L'actionnement du moteur peut être commandé depuis l'alimenteur via un connecteur électrique de liaison 29 ou directement au niveau du dispositif de chargement (alternative non représentée). Bien entendu, la configuration illustrée ne saurait être limitative, le nombre de niveaux envisageable n'étant limité que par des considérations d'accès et notamment d'encombrement en hauteur.

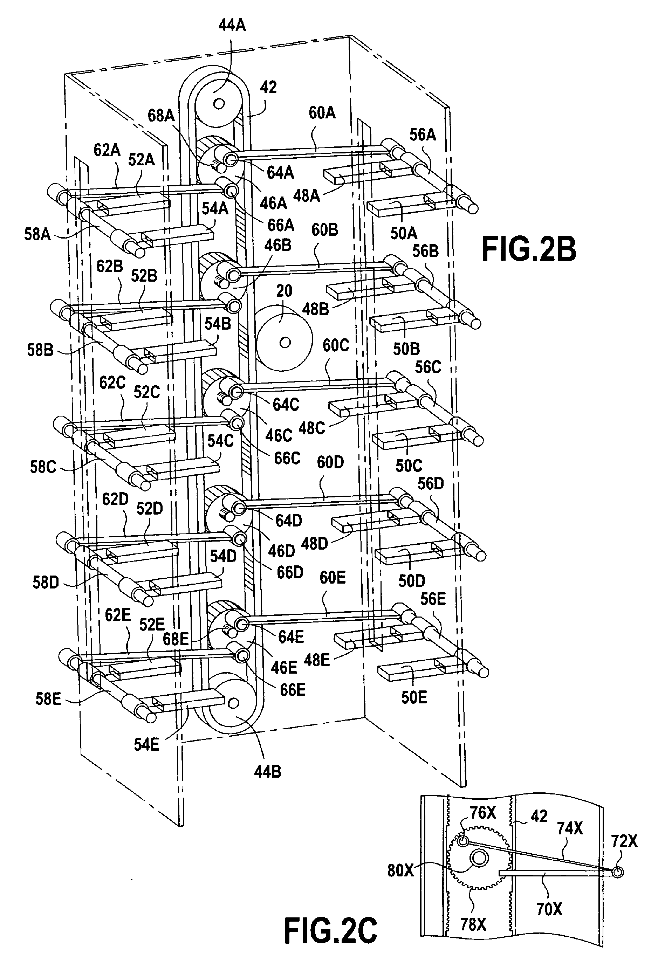

La figure 2B illustre un mode de réalisation préférentiel du dispositif de chargement selon l'invention dans lequel les différentes piles d'articles de courrier ne sont plus supportées par des barres de soutien se déplaçant verticalement et montées sur deux ensembles de chaines motorisées disposés de part et d'autre de cette pile mais par des palettes ou doigts support disposés de part et d'autre de cette pile se déplaçant horizontalement par un mécanisme bielle-manivelle à partir de roues dentées entrainées en rotation par une courroie unique. Plus précisément, une courroie 42 maintenue tendue entre deux axes de roue libre 44A, 44B est entrainée directement en rotation par le moteur d'entrainement 20. Sa face interne est partiellement crantée pour coopérer avec plusieurs roues dentées 46A, 46B, 46C, 46D, 46E dont la rotation entraine l'entrée ou la sortie de paires de palettes 48A-48E, 50A-50E ; 52B-52E, 54B-54E. Chaque paire de palettes est reliée par un axe perpendiculaire 56A-56B ; 58A-58E à une extrémité d'une biellette 60A-60E ; 62A-62E dont l'autre extrémité est solidaire d'un axe d'articulation déporté 64A-64E ; 66A-66E par rapport à l'axe central de la roue dentée sur laquelle est monté un ressort de rappel spiral 68A-68E. En effet, tant que la courroie est en prise avec une roue dentée, les palettes associées rentrent dans leur logement, dans une position de retrait, dégageant la pile correspondante et lorsque la partie crantée de la courroie dépasse la roue, cette dernière n'est plus entrainée par la partie non crantée de la courroie provoquant une sortie des palettes, dans leur position de support, sous l'effet de ce ressort de rappel monté sur l'axe de chacune des roues dentées 46A-46E. Comme précédemment, le moteur d'entrainement 20 actionnant les palettes est commandé depuis l'alimenteur via le connecteur électrique de liaison 29.

Bien entendu, il n'est pas obligatoire de recourir pour le support de la pile à une paire de palettes disposée sur chacun de ces deux cotés transversaux, une palette unique disposée de chaque coté pouvant convenir sous réserve qu'elle présente une largueur suffisante par rapport à celles des articles de courrier à charger (typiquement de l'ordre de 1/3 à 2/3 de cette largeur). De même, comme l'illustre la variante de la figure 2C, sous réserve que cette palette unique soit de dimension suffisante par rapport à la pile d'articles de courrier qu'elle supporte (au moins la moitié), il est possible de ne disposer que d'un seul mécanisme bielle-manivelle par niveau avec une palette 70X monté sur son axe 72X à une extrémité de la biellette 74X dont l'autre extrémité est articulée sur l'axe déporté 76X de la roue dentée 78X entrainée par la courroie partiellement crantée 42et donc l'axe de rotation comporte un ressort spiral de rappel 80X.

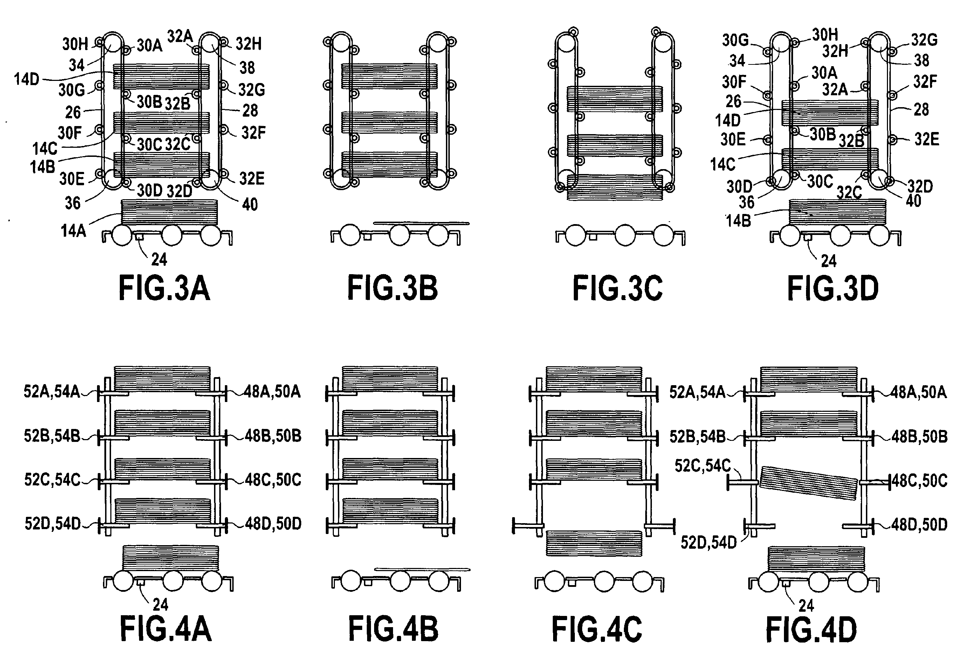

Le fonctionnement du dispositif de chargement selon l'invention est maintenant explicité en regard des figures 3A à 4D.

La figure 3A illustre la position initiale du dispositif de chargement selon le mode de réalisation non revendiqué ainsi que celle de la machine de traitement de courrier, dont le plateau de réception est toutefois seul représenté, avant sa mise en service. Dans cette position, la colonne de rangement du dispositif de chargement et le plateau de réception de l'alimenteur de cette machine de traitement de courrier ont été chacun chargés préalablement par l'opérateur par leurs piles d'enveloppes respectives. Typiquement, une pile d'environ 200 enveloppes est disposée sur le plateau de réception 10A de l'alimenteur et avantageusement trois piles d'environ 200 enveloppes chacune dans la colonne de rangement 14 du dispositif de chargement formant ainsi un ensemble de 600 enveloppes. Dans cette position initiale, le moteur d'entraînement 20 du dispositif de chargement est au repos et les enveloppes sont donc immobiles. Le capteur 24 de présence courrier dans l'alimenteur est dans un état initial « haut » signifiant la présence d'enveloppes sur le plateau de réception 10A de l'alimenteur.

La mise en service de la machine de traitement de courrier va commander le fonctionnement de l'alimenteur qui va alors procéder au dépilage de sa pile d'enveloppes et éjecter une à une les enveloppes vers le poste d'affranchissement de cette machine pour aboutir moins de 50 secondes plus tard (pour une cadence de 15 000 enveloppes/heure) à la configuration de la figure 3B dans laquelle les dernières enveloppes sur le plateau de réception de l'alimenteur commencent à être happées par le dispositif de sélection et où le capteur de présence courrier est alors découvert et passe à un niveau « bas » signifiant par la même que l'alimenteur va être bientôt vide et qu'il doit donc être réapprovisionné.

Cette étape de réapprovisionnement est illustrée aux figures 3C et 3D. Elle correspond à la mise en route du moteur d'entraînement 20 qui actionne le déplacement simultané des chaines de transport assurant une libération de la première (la pile la plus basse) des piles d'enveloppes de la colonne de rangement du dispositif de chargement, laquelle pile s'apprête donc sur la figure 3C à tomber sur le plateau de réception de l'alimenteur pour venir remplacer la pile initiale d'enveloppes ayant été traitées par le poste d'affranchissement de la machine de traitement de courrier.

Une fois la pile d'enveloppes réceptionnée par l'alimenteur (voir la figure 3D), le dispositif de réception se retrouve dans une position semblable à celle de la figure 3A une pile d'enveloppes en moins (la pile la plus haute qui est descendue d'un niveau en même temps que la première pile), le capteur de présence courrier repassant à un niveau « haut » du fait de la présence de ces nouvelles enveloppes et le moteur d'entraînement du dispositif de chargement étant alors arrêté.

La figure 4A illustre la position initiale du dispositif de chargement selon le mode de réalisation préférentiel de l'invention et celle de la machine de traitement de courrier (le plateau de réception est une fois encore seul représenté) avant sa mise en service. Dans cette position, la colonne de rangement du dispositif de chargement et le plateau de réception de l'alimenteur de cette machine de traitement de courrier ont été chacun chargés préalablement par l'opérateur par leurs piles d'enveloppes respectives. Typiquement, une pile d'environ 200 enveloppes est disposée sur le plateau de réception 10A de l'alimenteur et avantageusement quatre piles d'environ 200 enveloppes chacune dans la colonne de rangement 14 du dispositif de chargement formant ainsi un ensemble de 800 enveloppes. Dans cette position initiale, le moteur d'entraînement 20 du dispositif de chargement est au repos et les enveloppes sont donc immobiles. Le capteur 24 de présence courrier dans l'alimenteur est dans un état initial « haut » signifiant la présence d'enveloppes sur le plateau de réception 10A de l'alimenteur.

La mise en service de la machine de traitement de courrier va commander le fonctionnement de l'alimenteur qui va alors procéder au dépilage de sa pile d'enveloppes et éjecter une à une les enveloppes vers le poste d'affranchissement de cette machine pour aboutir moins de 50 secondes plus tard, comme mentionné précédemment, à la configuration de la figure 4B dans laquelle les dernières enveloppes sur le plateau de réception de l'alimenteur commencent à être happées par le dispositif de sélection de cet alimenteur et où le capteur de présence courrier est alors découvert et passe à un niveau « bas » signifiant par la même que l'alimenteur va être bientôt vide et qu'il doit donc être réapprovisionné.

Cette étape de réapprovisionnement est illustrée aux figures 4C et 4D. Elle correspond à la mise en route du moteur d'entraînement 20 qui actionne le déplacement simultané des palettes support de premier niveau assurant une libération de la première (la pile la plus basse) des piles d'enveloppes de la colonne de rangement du dispositif de chargement, laquelle pile s'apprête donc à tomber par gravité sur le plateau de réception de l'alimenteur (figure 4C) pour venir remplacer la pile initiale d'enveloppes ayant été traitées par le poste d'affranchissement de la machine de traitement de courrier.

Une fois la pile d'enveloppes réceptionnée par l'alimenteur (figure 4D), le capteur de présence courrier repasse à un niveau « haut » du fait de la présence de ces nouvelles enveloppes mais, par opposition au premier mode de réalisation, le moteur d'entraînement du dispositif de chargement n'est pas alors arrêté car le dispositif de réception ne se retrouve pas encore dans une position semblable à celle de la figure 4A et les autres palettes support doivent être commandées niveau après niveau pour atteindre cette position (une pile en moins, la pile la plus haute étant descendue d'un niveau) en permettant la descente successive des autres piles d'enveloppes.

Ainsi, avec l'invention, la capacité d'alimentation en enveloppes est augmentée. La facilité de chargement est particulièrement appréciable pour l'opérateur du fait de la capacité d'origine peu importante du plateau de réception de l'alimenteur de même que l'absence totale de bourrage que procure un tel dispositif. En outre, la cinématique de déplacement des enveloppes est simplifiée au maximum permettant la réalisation d'un dispositif de chargement robuste et quasi sans maintenance.

On pourra noter que si la description précitée a été effectuée essentiellement en regard d'un alimenteur de machine de traitement de courrier, le dispositif de chargement de l'invention est bien entendu aussi applicable à tout autre type d'alimenteur (par exemple un alimenteur d'articles plats tels que des documents). On notera également que ce dispositif peut aussi être utilisé en sortie d'une machine d'affranchissement pour recevoir les courriers éjectés (avec un chargement par le haut) et les décharger alors par pile dans une caisse postale disposée en dessous du dispositif.

## Revendications

1. Dispositif de chargement d'articles plats comportant une colonne de rangement (12) pour recevoir des articles plats, dans lequel lesdits articles plats sont séparés en une pluralité de piles indépendantes (14A-14E) superposées les unes au dessus des autres et maintenues par une pluralité de moyens de support, des moyens de commande (20, 22) étant prévus pour libérer successivement par gravité chacune desdites piles indépendantes ainsi séparées, lesdits moyens de support comportant une palette (70X) disposée sur un des cotés de ladite pile d'articles plats, **caractérisé par** ladite palette pouvant se rétracter horizontalement d'une position de support à une position de retrait sous l'action de la rotation d'une roue dentée (46) à laquelle ladite palette est reliée par un mécanisme de type bielle-manivelle (60, 62, 64, 66 ; 74X, 76X), ladite position de retrait permettant ladite libération par gravité de ladite pile d'articles plats.

2. Dispositif selon la revendication 1, **caractérisé en ce que** lesdits moyens de support comportent au moins deux palettes disposées de part et d'autre de ladite pile d'articles plats, lesdites palettes pouvant se rétracter horizontalement d'une position de support à une position de retrait, ladite position de retrait permettant ladite libération par gravité de ladite pile d'articles plats.

3. Dispositif selon la revendication 2, **caractérisé en ce qu'**il comporte quatre palettes (48, 50 ; 52, 54) disposées de part et d'autre de ladite pile d'articles plats.

4. Dispositif selon la revendication 1, **caractérisé en ce que** ladite rotation de ladite roue dentée est réalisée par lesdits moyens de commande, via une courroie motorisée (42), en fonction de l'état d'un capteur de présence des articles plats (24).

5. Dispositif selon la revendication 4, **caractérisé en ce que** ledit capteur est choisi parmi des détecteurs de type mécanique, magnétique ou optique.

6. Dispositif selon l'une quelconque des revendications 1 à 5, **caractérisé en ce que** lesdits articles plats sont des articles de courrier.

7. Dispositif selon la revendication 6, **caractérisé en ce qu'**il est disposé au dessus d'un plateau de réception d'un alimenteur de machine de traitement de courrier.

8. Dispositif selon la revendication 7, **caractérisé en ce que** ladite pile d'articles de courrier libérée comporte une épaisseur définie par la capacité d'alimentation maximale dudit alimenteur.

## Claims

1. A flat-article loader device comprising a storage tower (12) for receiving flat articles, in that the flat articles are separated into a plurality of independent stacks (14A-14E) that are superposed one above another and that are held by a plurality of support means, control means (20, 22) being provided for successively releasing, by gravity, each of said independent stacks separated in this way, said support means comprising a paddle (70X) disposed on one of the sides of said stack of flat articles, **characterized in that** it is possible for said paddle to retract horizontally from a support position to a retracted position under the action of rotation of a toothed wheel (46) to which said paddle is connected via a mechanism of the crank and connecting rod type (60, 62, 64, 66; 74X, 76X), said retracted position making it possible for said stack of flat articles to be released by gravity.

2. A device according to claim 1, **characterized in that** said support means comprise at least two paddles disposed on either side of said stack of flat articles, it being possible for said paddles to retract horizontally from a support position to a retracted position, said retracted position making it possible for said stack of flat articles to be released by gravity.

3. A device according to claim 2, **characterized in that** it have four paddles (48, 50; 52, 54) disposed on either side of said stack of flat articles.

4. A device according to claim 1, **characterized in that** said toothed wheel is caused to move in rotation by said control means, via a motor-driven belt (42), as a function of the state of a presence sensor (24) for sensing presence of the flat articles.

5. A device according to claim 4, **characterized in that** said sensor is chosen from among detectors of the mechanical, magnetic, or optical type.

6. A device according to claims 1 to 5, **characterized in that** said flat articles are mailpieces.

7. A device according to claim 6 **characterized in that** it is disposed above a mail-receiving bed of a feeder of a mail-handling machine.

8. A device according to claim 7, **characterized in that** said released stack of mailpieces has a thickness defined by the maximum feed capacity of said feeder.

## Patentansprüche

1. Vorrichtung zum Zuführen von flachen Artikeln, umfassend eine Ablagesäule (12) zur Aufnahme von flachen Artikeln, wobei die flachen Artikel in eine Vielzahl von unabhängigen Stapeln (14A-14E), die übereinander angeordnet und durch eine Vielzahl von Tragmitteln gehalten sind, aufgeteilt sind, wobei Steuermittel (20, 22) vorgesehen sind, um einen jeden der so aufgeteilten unabhängigen Stapel nacheinander durch Schwerkraft freizugeben, wobei die Tragmittel ein Brett (70X) umfassen, das auf einer der Seiten des Stapels flacher Artikel angeordnet ist, **gekennzeichnet durch** das Brett, das sich unter der Wirkung der Rotation eines Zahnrades (46), mit dem das Brett über einen Mechanismus vom Typ Schubkurbel (60, 62, 64, 66; 74X, 76X) verbunden ist, von einer Tragposition in eine Rückzugposition horizontal zurückziehen kann, wobei die Rückzugposition die Freigabe des Stapels flacher Artikel **durch** Schwerkraft ermöglicht.

2. Vorrichtung nach Anspruch 1, **dadurch gekennzeichnet, daß** die Tragmittel wenigstens zwei Bretter umfassen, die auf beiden Seiten des Stapels flacher Artikel angeordnet sind, wobei die Bretter sich von einer Tragposition in eine Rückzugposition horizontal zurückziehen können, wobei die Rückzugposition die Freigabe des Stapels flacher Artikel durch Schwerkraft ermöglicht.

3. Vorrichtung nach Anspruch 2, **dadurch gekennzeichnet, daß** sie vier Bretter (48, 50; 52, 54) umfaßt, die auf beiden Seiten des Stapels flacher Artikel angeordnet sind.

4. Vorrichtung nach Anspruch 1, **dadurch gekennzeichnet, daß** die Rotation des Zahnrades durch die Steuermittel, über einen motorisierten Riemen (42), in Abhängigkeit des Zustandes eines Anwesenheitssensors für die flachen Artikel (24) erfolgt.

5. Vorrichtung nach Anspruch 4, **dadurch gekennzeichnet, daß** der Sensor aus Detektoren vom mechanischen, magnetischen oder optischen Typ ausgewählt ist.

6. Vorrichtung nach einem der Ansprüche 1 bis 5, **dadurch gekennzeichnet, daß** die flachen Artikel Poststücke sind.

7. Vorrichtung nach Anspruch 6, **dadurch gekennzeichnet, daß** sie oberhalb einer Platte zur Aufnahme einer Zuführeinrichtung einer Postbearbeitungsmaschine angeordnet ist.

8. Vorrichtung nach Anspruch 7, **dadurch gekennzeichnet, daß** der freigegebene Stapel von Poststücken eine Dicke aufweist, die durch die maximale Zuführkapazität der Zuführeinrichtung definiert ist.
